# EUROPEAN PATENT SPECIFICATION

(11) **EP 2 548 256 B1**
(45) Date of publication and mention of the grant of the patent: **26.02.2014**
(21) Application number: 11712650.8
(22) Date of filing: 11.03.2011
(51) Int. Cl.: H01M 8/18, H01M 8/20, H01M 8/22, H01M 8/24, H01M 8/02, H01M 8/04

(54) **ELECTROCHEMICAL CELL STACK**
BATTERIEZELLENSTAPEL
EMPILEMENT DE CELLULES ÉLECTROCHIMIQUES

(30) Priority: 17.05.2010 US 345339 P; 19.03.2010 GB 201004650
(43) Date of publication of application: 23.01.2013
(73) Proprietor: Renewable Energy Dynamics Technology Ltd, Dublin 2 (IE)
(72) Inventor: UNDERWOOD, Richard Lindsay, Berkshire RG2 8LL (GB); RIDLEY, Peter John, Yateley GU46 7TT (GB)
(74) Representative: Brooks, Nigel Samuel
(86) International application number: PCT/GB2011/000351
(87) International publication number: WO 2011/114094

(56) References cited:
- WO-A1-2006/111704
- JP-A- 60 037 652
- JP-A- 63 069 151
- US-A1- 2009 047 570
- US-B1- 7 361 427

## Description

The present invention relates to a stack of electrochemical or electrolytic cells, in particular though not exclusively to a regenerative reduction/oxidation (redox) fuel cell stack.

Electrochemical cells are known which consist typically of between two and fifty alternate positive and negative half cells, although greater numbers are not unknown; since the cells components are stacked together, such a plurality of half cells is typically known as an electrochemical stack or an electrolytic cell stack, often shortened simply to "a stack". Significant factors in the design of such a cell stack are the method of construction and thickness of the individual cells. Typical arrangements use what is known as a filter press design comprising within each cell successive layers of a non-conductive gasket material. The layers comprise frames, which provide accommodation for electrode material and also contain within their thickness electrolyte flow distribution passages. Each frame is assembled into one of two types of one half cell - positive and negative; it is noted that in general the design of frames for both positive and negative half cells is essentially similar and their assignment as either is a consequence of the overall construction and use of the stack rather than any inherent characteristic. These frames are typically interleaved alternately with sheets of a suitable electrode material and a suitable membrane separator. This construction produces a succession of half-cell pairs in series with electrodes common to two half cells, whence the electrodes are referred to as bipolar electrodes. It is also possible and desirable in some applications to connect electrically to the intermediate electrodes and, depending on the internal electrolyte distribution arrangement, operate the cells in various other series and/or parallel manners when some or all of the electrodes may be unipolar rather than bipolar.

Since the frames must provide a number of different features, including hydraulic sealing, mechanical strength, accommodation of the electrode and flow distribution passages, these passages being required to provide both isolation against internal shunt currents and conversely minimal flow resistance and uniform flow distribution, a design compromise between features is usually required. In particular, it is known to be desirable to achieve high linear flow velocity of electrolyte within the cell, which implies small cell spacing but since the frame thickness defines the spacing this in turn has the undesired effect of reducing the depth available for the distribution passages which are typically indented into one or other surface of the frames. Furthermore, it is known that for efficient and reliable cell performance, closure of the distribution channels within such frames must be achieved such as to prevent undesirable and potentially damaging paths for both hydraulic and electrical current leakage

With a view to providing an improved electrochemical cell stack, in our European Patent Application No 06 726 659, as now granted, (Our Earlier Patent) we have described and claimed an electrochemical stack cell comprising a plurality of cells arranged side-by-side in a stack, each cell having:
- a membrane,
- a first half cell cavity on one side of the membrane and a second half cell cavity on the other side of the membrane,
- a respective electrode plate at the side of each half cell opposite from the membrane, each electrode plate providing contact between adjacent cells at least for intermediate ones of the cells,
- a pair of frames, one for one half cell and the other for the other, the frames:
   - captivating the membrane between themselves,
   - locating the electrode plates and
   - having:
      - continuous margins around central voids providing the half cell cavities,
      - apertures in the continuous margins providing ducts for flow of electrolyte through the stack for distribution to the cells,
      - electrolyte distribution rebates at opposite inside edges of the margins and
      - passages in the continuous margins for electrolyte flow from one of the duct apertures, into and out of the half cell at the distribution rebates and to another of the duct apertures,
wherein:
- each plate electrode is captivated between a frame from one cell and a frame from an adjacent cell with at least two portions of the margins of these frames extending outside respective edges of the plate electrode, the adjacent cell frames having faces which abut at the portions;
- the flow passages are formed in the faces of the margins and are closed by abutting opposite frame faces; and
- through-frame openings are provided in the frames for extending the passages from the abutting faces of the frames to the other, membrane side of the frames into distribution rebates.

In Our Earlier Patent, we preferred the frames to be rectangular, i.e. having four straight margins, with the electrolyte duct apertures arranged at the corners and the flow passages provided in two opposite margins only.

Also, we preferred to provide all the passages in the face of one of each pair of abutting face frames, i.e. with two passages in each marginal portion having passages with one through frame opening in the portion at the end of one of the passages and another said opening in the other frame opposite the end of the other passage.

Also we preferred for the electrodes to be captivated at rebates in the abutting faces of the frames extending around the entire continuity of the margins around the central void

Further we preferred to provide seals around the ducts and the passages radiating from them and around the electrodes. The seals can be of gasket material, but are preferably O-rings set in grooves in frames.

Two final preferences were:
- passage extensions provided in the opposite faces of the frames from the abutting faces, the extensions extending from the through-frame openings to the respective electrolyte distribution rebates; and
- the electrolyte distribution rebates being wider than the electrode captivation rebates.

Whilst the stack of Our Earlier Patent addressed many issues, there remains an inherent shunt current issue with electrochemical cell stacks, which is not unique to the stack of Our Earlier Patent. It results from the electrolyte ducts extending from end to end of the stacks via the apertures. The electrolytes are conductive and provide electrical connection from each cell (or at least each half cell of the same type) to each other cell, the connection to the ducts being via the flow passages in the margins. The flow passages are small compared with the ducts, whereby the electrolyte in them provides a relatively high resistance between individual cells. However the ducts have a relatively low resistance. Thus the resistance between adjacent cells is of the same order of magnitude as the resistance between cells at opposite ends of the stack. The potential between opposite end stacks increases in proportion to the number of stacks. Thus long stacks have an inherent internal shunt current loss, the shunt current flowing in the electrolyte ducts.

A prior art electrochemical stack is disclosed by US 2009/047570.

The object of the present invention is to provide an improved electrochemical cell stack.

The invention is defined in claim 1.

According to the invention there is provided an electrochemical cell stack comprising a plurality of cells arranged side-by-side in a stack, each cell having:
- a membrane,
- a first half cell cavity on one side of the membrane and a second half cell cavity on the other side of the membrane,
- a respective electrode plate at the side of each half cell opposite from the membrane, each electrode plate providing contact between adjacent cells at least for intermediate ones of the cells,
- a pair of frames, one for one half cell and the other for the other, the frames:
   - captivating the membrane between themselves,
   - locating the electrode plates and
   - having:
      - continuous margins around central voids providing the half cell cavities,
      - apertures in the continuous margins providing ducts for flow of electrolyte through the stack for distribution to the cells, that is there being respective apertures and ducts for both feed and return of both anolyte and catholyte to the cells,
      - electrolyte flow passages in the continuous margins of one or other or both of the frames of the pair for electrolyte flow from one of the duct apertures, into and out of the half cell and to another of the duct apertures,
wherein:
- each frame has at least two apertures for each of feed and return of each of the anolyte and the catholyte,
   - one of said at least two apertures being for feed or return via respective ones of the electrolyte flow passages to and from the half cell defined by the frame or to an adjacent half cell and
   - the or each other of said at least two apertures being for feed or return to a remote half cell in the stack, via respective flow passages in a remote frame;
the arrangement being such that the stack is divided into sections corresponding to the number of apertures for each of feed and return of anolyte and catholyte, whereby the voltage along the anolyte or catholyte ducts in contact with the cells of the section is the total stack voltage reduced by the ratio of the number of cells of the section to the total number of cells.

In the preferred embodiment, the apertures and the ducts are duplicated, that is there are two of each type - anolyte/catholyte & flow/return. This provides division into two sections and halving of the shunt current voltage across the sections with respect to the overall stack voltage. Whilst in Our Earlier Patent, we preferred to place the apertures / ducts at the corners of the frames, in the present preferred embodiment, in which the cells are rectangular with feed and return being at opposite short ends, all the apertures are at the short ends. However it can be envisaged that, particularly where more than two apertures / ducts are provided for each anolyte/catholyte & flow/return type, these may be arranged both at the end and the sides of the rectangle. For instance two pairs of ducts at each end and one pair of ducts at each end of each side provides for division into four sections.

Whilst in theory it is possible to envisage sealing of the frames to each other without separate sealing elements, we expect to provide seals between individual frames. Normally as in Our Earlier Patent, O-ring seals will be used, with positioning grooves in the one or both faces of the frames.

Preferably, there is a seal surrounding apertures of each type, together with a respective seal within each of these seals sealing the or each aperture forming part of the duct for remote electrolyte supply from the aperture for the local supply via the flow passages. To enable electrolyte flow beyond the,aperture surrounding seals, the flow passages lead to their half cells via through frame openings.

Whilst it can be envisaged that each frame has flow passages leading from the aperture for the duct locally supplying electrolyte, typically with the anolyte being fed and returned by one frame and the catholyte being fed and returned by the next frame; in the preferred embodiment every other frame has all the flow passages leading from / to the apertures, with these flow passages being in a face of the frame which is level with an inter-cell electrode plate, this frame and the other wise plain frame, i.e. all the frames having through frame openings, as in Our Earlier Patent Application.

In accordance with a significant preferred feature, each flow passage from its duct is serpentine or has at least one return back on itself, to increase the electrical resistance along the flow passage.

Normally the flow passages will be closed by a face of the next frame in the stack of frames.

As in Our Earlier Patent, the flow passages, or the through frame openings where provided, open into rebates in the frames for spreading or collecting the electrolyte flow across the ends of the half cells. The latter are conveniently filled with graphite felt to enhance electrical contact between the electrolyte and the half cell's electrode.

The membrane are typically semi-permeable membranes sealingly held against a plain face of a frame on one side thereof by a seal carried by a frame on the other side.

To help understanding of the invention, a specific embodiment thereof will now be described by way of example and with reference to the accompanying drawings, in which:
Figure 1 is an exploded perspective view of an electrochemical cell stack in accordance with the invention;

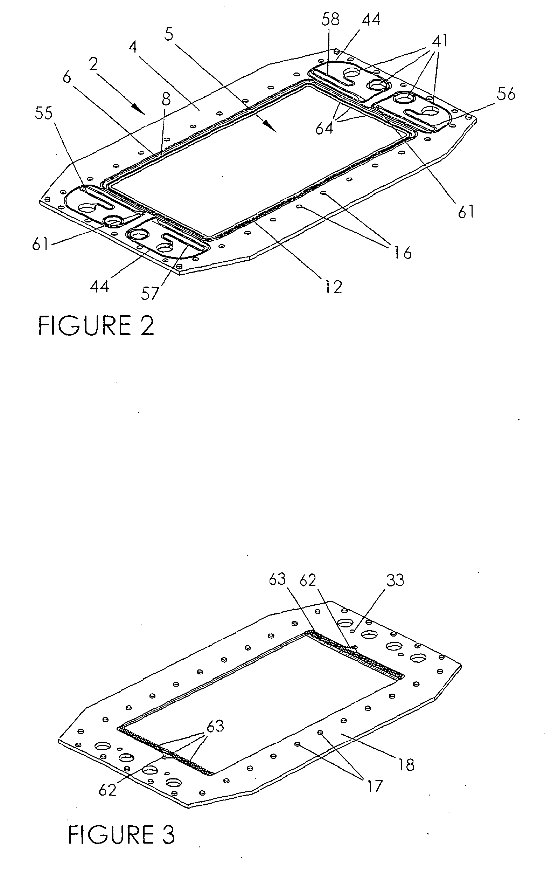

Figure 2 is similar perspective view of a passage frame from the bottom half of the stack of Figure 1;
Figure 3 is an underneath view of the passage frame of Figure 2;

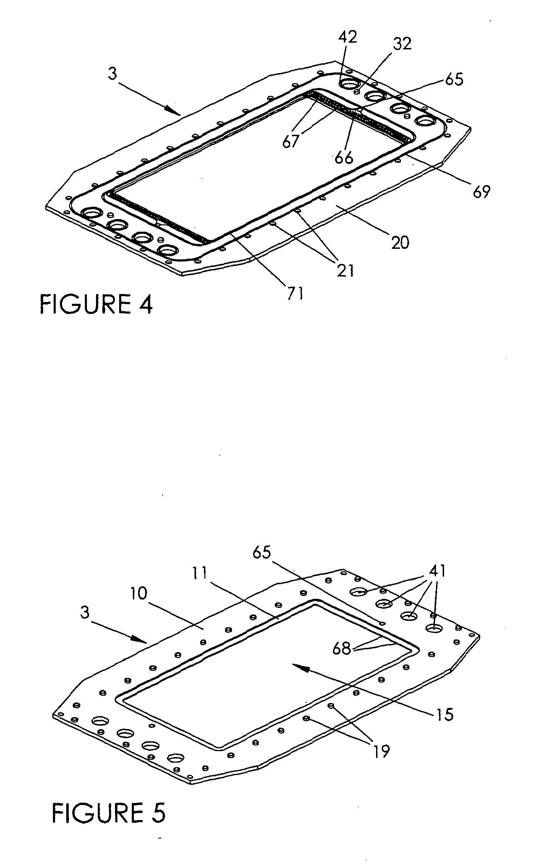

Figure 4 is similar perspective view of a transfer frame of the stack of Figure 1;
Figure 5 is an underneath view of the transfer frame of Figure 4;

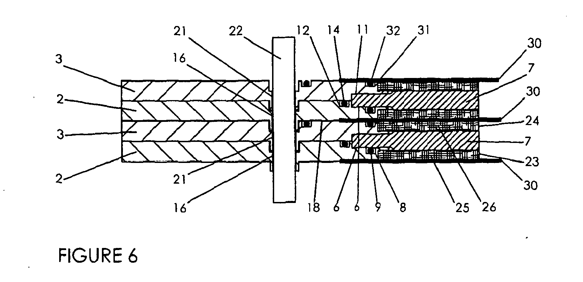

Figure 6 is a scrap cross-sectional view of two passage and transfer frame pairs, the cross-section being on the line VI-VI in Figure 1 at one side of the stack;

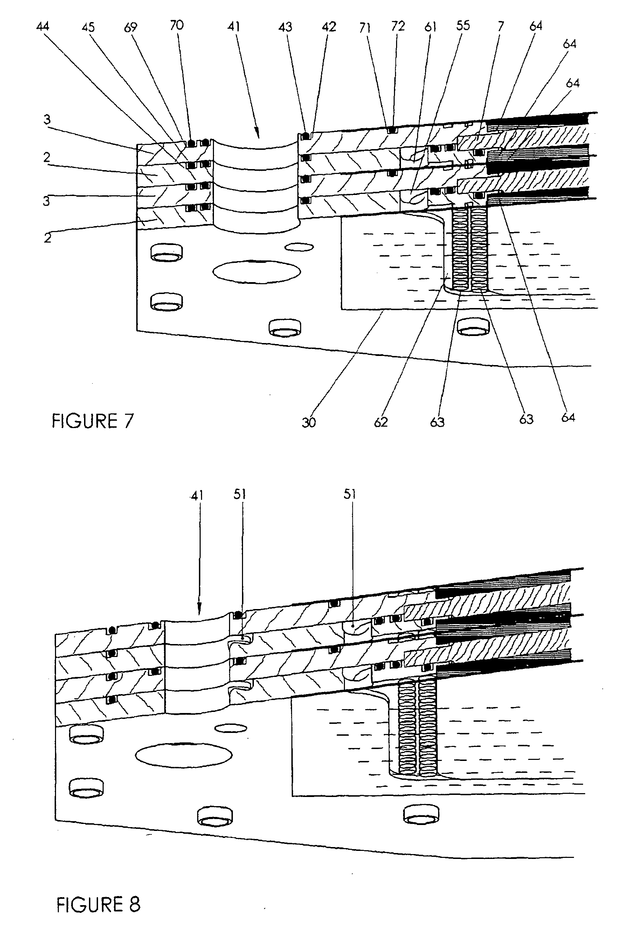

Figure 7 is a scrap cross-sectional view of two passage and transfer frame pairs, the cross-section being on the line VII-VII in Figure 1 at one end of the stack, showing lack of anolyte flow from inner one of flow apertures to the cells of the stack at this end of the stack; and
Figure 8 is a similar cross-sectiona 1 view of two passage and transfer frame pairs, the cross-section being on the line VIII-VIII in Figure 1 at the other end of the stack, showing anolyte flow from inner one of flow apertures to the cells of the stack at this end of the stack.

Referring to the drawings, an electrochemical stack 1 consists of frames of two types, referred to here as passage frames 2 and transfer frames 3. They are arranged alternately in the stack, that is first a passage frame and then a transfer frame along the length of the stack.

On one side or face 4 of each passage frame, it has many grooves for O-ring seals and other grooves for electrolyte passage. These will be described in more detail below. It has a central opening 5 with a rebate 6 open on the one side around the opening. The rebate is half the thickness of an electrode 7 of carbon filled polymer. The rebate has a groove 8 for an O-ring 9 against which the electrode seats. Thus no electrolyte can bypass the electrode. The complementary face 10 of the next transfer frame 3 is plain and has another rebate 11, also half the depth of the electrode. Whilst the electrode is a clearance fit sideways in the rebates, it is captivated by the frames when they are held together, face 4 to face 10. The rebate 11 has no O-ring groove, but face 4 of the passage frame has groove 12 surrounding the rebate 6 for an O-ring 14, whereby electrolyte from the rebate 11 cannot flow out sideways between the frames nor by-pass the electrode due to the O-ring 9. The frame 3 also has a central opening 15.

To locate the frames with respect to each other, each passage frame has counter bores 16 in margins around the central opening. The bores extend on through open bosses 17 extending from the plain, other face 18 of the frame with large diameter ends of the counter bores opening in the face 4. Equally the plain, rebated face 10 of the transfer frame also has open bosses 19, whilst its other face 20 has counter bores 21. With the bosses 19 engaging in the counter bores 16, the frames are fully located against sliding of their faces one with respect to the other. With the stack fully assembled, tie bars 22 extend through the bores 16, 21 and exert force to keep the stack tightly compressed together, the tie bars having nuts 35 reacting against stack end plates 36.

It should be understood that the above described frame 2, electrode 7 and frame 3 define within the frames two half-cell spaces 23,24 of adjacent cells, separated by a common electrode or dipole 7. The spaces are filled with graphite felt 25,26, in electrical contact with the electrode and the electrolyte in the spaces.

Pairs of frames with captivated electrodes are assembled with semi-permeable membranes 30 between them. The top face 20 of each transfer frame has a groove 31 for a membrane sealing O-ring 32. The membrane covers the extent of the O-ring, which presses the membrane against the plain face 18 of the passage frame assembled against it. The membrane is limited in its position lengthways of the frames by fitting between pips 33 on the face 20 of the transfer frame, the pips engaging in bores 33 in the opposite face 15. Laterally, the membrane is limited by the bosses 17 of the passage frame. With the stack compressed, this arrangement seals the membrane to the frames without the possibility of electrolyte escaping from between the frames. A cell is thus defined including the two half-cells on either side of the membrane and the electrodes on opposite sides of the half-cell spaces 23,24.

Arrangements for passing electrolyte to and from the half-cell spaces will now be described. The preferred electrolyte is vanadium sulphate. Vanadium can adopt four different valency states and Vanadium Redox chemistry is described in US Patent No 4,786,567, to which the reader is referred for a better understanding. Suffice it here to say that the anolyte and catholyte which are present in the half-cells on opposite sides of the membrane comprise solutions of vanadium in differing valency states. The arrangements for supply of anolyte and catholyte are virtually identical and the choice of which is which is arbitrary as regards the physical structure of the stack, although it does impinge directly on the polarity of the stack.

The passage frames and the transfer frames have lines of four apertures 41 at each end. With the frames assembled in the stack, the apertures form four ducts at each end of the side of the stack corresponding to ends of the frames, with the ducts extending from end to end of the stack for electrolyte flow therethrough. The apertures in the transfer frames have no passages connected to them and are merely for transferring electrolyte from one side of the frames to the other, that is longitudinally of the stack. These apertures have grooves 42 and O-rings 43 extending around them. These prevent escape of electrolyte sideways between the frames at their abutting faces 18,20 which have the membrane between them.

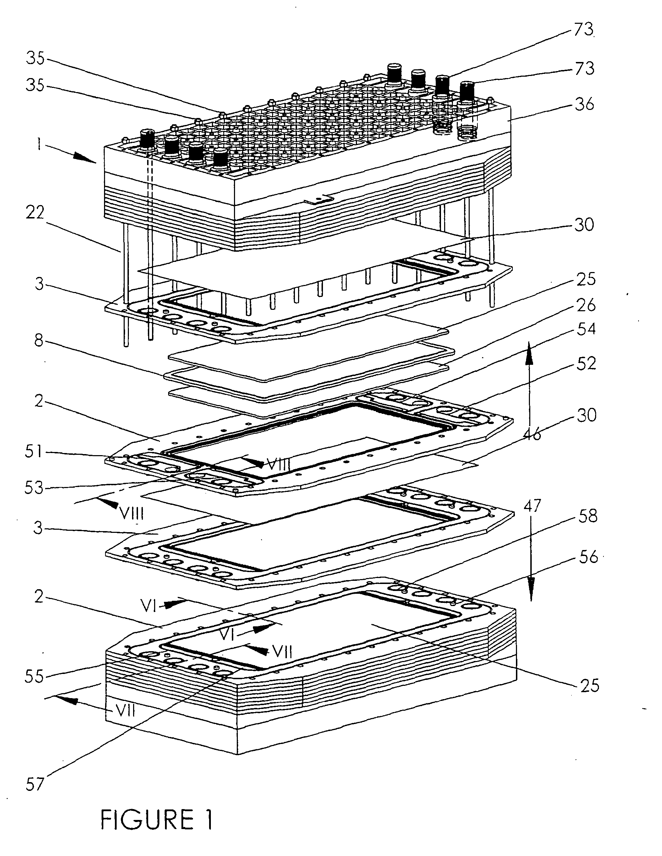

The eight apertures 41 in the passage frame are surrounded in pairs by four grooves 44 and O-rings 45, dividing them into a pair for anolyte feed, a pair for anolyte return, a pair for catholyte feed and a pair for catholyte return. The stack is divided into opposite end sections 46,47. Only one of each pair is connected to a local feed or return flow passage, contained within the O-rings. The other is connected in the other section. As shown in Figure 1, the passages are given the following reference numerals:
Section 46:

| | |
|---|---|
| Anolyte Feed | 51 |
| Anolyte Return | 52 |
| Catholyte Feed | 53 |
| Catholyte Return | 54 |

Section 47:

| | |
|---|---|
| Anolyte Feed | 55 |
| Anolyte Return | 56 |
| Catholyte Feed | 57 |
| Catholyte Return | 58. |

The anolyte feed and return passages 51,52,55,56 lead from their apertures to respective openings 61 from the side 4 of each passage frame to its plain face 18. Here a distribution rebate 62, with spreading features 63, is provided to distribute / collect electrolyte to the graphite felt in the anolyte half cell. At the edge of the rebate and around entire opening 5 spikes 64 are provided for engaging the edge of the felt and locating it.

In the section 46 of the stack, the anolyte feed and return passages 51,52 take anolyte from the inner of the two anolyte feed apertures / ducts through the stack and return it to the inner of the two anolyte return ducts at the other end of the frame / side of the stack. In contrast in the other end section 47 of the stack, the anolyte feed and return passages 55,56 are connected to the outer two anolyte ducts.

The catholyte feed and return ducts are similarly arranged.

The result is that there is no electrically connection via the electrolyte in the ducts between cells at opposite ends of the stack. The inner ones of the ducts connect the cells at opposite ends of the section 46 and the outer ones the cells at opposite ends of the ducts 47. Thus a shunt current paths still exist, but at only half the voltage to the entire stack.

A few further retails remain to be described. All the feed and return passages are serpentine, that is turned back on themselves, within between their apertures 41 and their through openings 61. This substantially increases their electrical resistance, with respect to what it would be if the passages were straight. This increased resistance further reduces the shunt current.

The catholyte passages do not have through passages in the passage frames, but equivalent passages 65 are provided in the transfer frames to similar distribution rebates 66, spreading features 67 and felt spikes 68 in the faces 20 of the frames. These faces also include grooves 69 and O-rings 70s extending around all the features in the face with the exception of the counter bores 21. These O-rings are in case of any possible leak from the O-rings within them, unlikely as such leaks are. Within the grooves 69, are further grooves 71 around the central openings 15 and arranged for O-rings 72 to bear against the membranes 30 and isolate any tendency for electrolyte to leak to the edges of the membrane.

The electrolytes are fed to and from the stack by end fittings 73 in one of the end plates 36 and connected to the ducts formed of the apertures 41. The end plates carry end electrodes (not shown) for the stack.

The above described embodiment will be seen to have an advantageously improved shunt current loss due to the electrolyte apertures and ducts in the stack being duplicated for feed of electrolyte to sections of the stack across which the voltage inducing the shunt current is reduced from the overall stack voltage.

## Claims

1. An electrochemical cell stack (1) comprising a plurality of cells arranged side-by-side in a stack, each cell having:
• a membrane (30),
• a first half cell cavity (23) on one side of the membrane and a second half cell cavity (24) on the other side of the membrane,
• a respective electrode plate (7) at the side of each half cell opposite from the membrane, each electrode plate providing contact between adjacent cells at least for intermediate ones of the cells,
• a pair of frames (2, 3), one for one half cell (2) and the other for the other (3), the frames:
• captivating the membrane (30) between themselves,
• locating the electrode plates (7) and
• having:
• continuous margins around central voids (5, 15) providing the half cell cavities,
• apertures (41) in the continuous margins providing ducts for flow of electrolyte through the stack for distribution to the cells, that is there being respective apertures and ducts for both feed and return of both anolyte and catholyte to the cells,
• electrolyte flow passages (51, 52, 53, 54, 55, 56, 57, 58) in the continuous margins of one or other or both of the frames of the pair for electrolyte flow from one of the duct apertures, into and out of the half cell and to another of the duct apertures,
wherein:
• each frame has at least two apertures for each of feed and return of each of the anolyte and the catholyte,
• one of said at least two apertures being for feed (51, 53) or return (52, 54) via respective ones of the electrolyte flow passages to and from the half cell defined by the frame or to an adjacent half cell and
• the or each other of said at least two apertures being for feed (55, 57) or return (56, 58) to a remote half cell in the stack, via respective flow passages in a remote frame;
the arrangement being such that the stack is divided into sections (46, 47) corresponding to the number of apertures for each of feed and return of anolyte and catholyte, whereby the voltage along the anolyte or catholyte ducts in contact with the cells of the section is the total stack voltage reduced by the ratio of the number of cells of the section to the total number of cells.

2. An electrochemical cell stack as claimed in claim 1, wherein the apertures (51) and the ducts (51, 52, 53, 54, 55, 56, 57, 58) are duplicated, that is there are two of each type.

3. An electrochemical cell stack as claimed in claim 1 or claim 2, wherein the cells are rectangular with feed and return flow passages being provided at opposite short ends of the frames (2, 3).

4. An electrochemical cell stack as claimed in claim 1, claim 2 or claim 3, wherein all the apertures (41) for feed and return are in opposite short ends of the frames.

5. An electrochemical cell stack as claimed in claim 1, claim 2 or claim 3, wherein more than two apertures / ducts (41) are provided, for each anolyte/catholyte & flow/return type, and are arranged both at the end and the sides of the frames.

6. An electrochemical cell stack as claimed in any preceding claim, including seals (14, 70) between adjacent ones of the frames.

7. An electrochemical cell stack as claimed in claim 6, wherein the seals (14, 70) are O-ring seals, with positioning grooves in the one or both faces of the frames.

8. An electrochemical cell stack as claimed in claim 6 or claim 7, wherein:
• there is a seal surrounding apertures of each type, together with a respective seal within each of these seals sealing the or each aperture forming part of the duct for remote electrolyte supply from the aperture for the local supply via the flow passages and
• the flow passages lead to their half cells via through frame openings.

9. An electrochemical cell stack as claimed in any preceding claim, wherein each frame (2, 3) has flow passages leading from respective ones of the aperture locally supplying electrolyte, or every other frame has all the flow passages (51, 52, 53, 54) leading from / to the apertures locally supplying electrolyte, these flow passages being in a face of the frame which is level with an inter-cell electrode plate.

10. An electrochemical cell stack as claimed in any preceding claim, wherein each flow passage from its duct is serpentine or has at least one return back on itself, to increase the length of the flow passage and the electrical resistance along it.

11. An electrochemical cell stack as claimed in any preceding claim, wherein the flow passages terminate at positions (61) in the frame which are common as between a flow passage from one of said at least two apertures and the or each other of said at least two apertures.

12. An electrochemical cell stack as claimed in any preceding claim, wherein the flow passages are closed by a face of the next frame in the stack of frames.

13. An electrochemical cell stack as claimed in any preceding claim, wherein the flow passages, or the through frame openings where provided, open into rebates in the frames for spreading or collecting the electrolyte flow across the ends of the half cells.

14. An electrochemical cell stack as claimed preceding claim, wherein the half cells are filled with graphite felt (25, 26) to enhance electrical contact between the electrolyte and the half cell's electrode.

15. An electrochemical cell stack as claimed preceding claim, wherein the membranes (30) are semi-permeable membranes sealingly held against a plain face of a frame on one side thereof by a seal carried by a frame on the other side.

## Patentansprüche

1. Elektrochemischer Zellenstapel (1) mit mehreren in einem Stapel nebeneinander angeordneten Zellen, wobei jede Zelle aufweist:
• eine Membran (30),
• eine erste Aussparung einer Halbzelle (23) an einer Seite der Membran und eine zweite Aussparung einer Halbzelle (24) an der anderen Seite der Membran,
• eine zugehörige Elektrodenplatte (7) an der gegenüber der Membran befindlichen Seite einer jeden Halbzelle, wobei jede Elektrodenplatte einen Kontakt zwischen benachbarten Zellen bei zumindest intermediär liegenden Zellen schafft,
• ein Paar Rahmen (2,3), von denen einer der einen Halbzelle (2) und der andere der anderen Halbzelle (3) zugeordnet ist, wobei die Rahmen:
• die Membran (30) zwischen sich einfassen
• die Elektrodenplatten (7) örtlich festlegen und
• aufweisen:
• geschlossene Randbereiche um zentrale Freiräume (5,15), die die Aussparungen der Halbzellen bilden,
• Durchlässe (41) in den geschlossenen Randbereichen, die Kanäle für den Durchfluss eines Elektrolyts durch den Stapel zur Verteilung zu den Zellen bilden, wobei die zugehörigen Durchlässe und Kanäle für sowohl den Vorlauf als auch für den Rücklauf von sowohl Anolyt als auch von Katholyt zu den Zellen zuständig sind,
• Kanäle für den Elektrolytdurchfluss (51, 52, 53, 54, 55, 56, 57, 58) in den geschlossenen Randbereichen von einem oder dem anderen oder beiden der Rahmen des Paares für den Elektrolytdurchfluss von einem der Kanaldurchlässe in die und aus der Halbzelle und zu einem der anderen Kanaldurchlässe, wobei
• jeder Rahmen mindestens zwei Durchlässe für jeden Vor- und Rücklauf von jedem der Anolyten und der Katholyten aufweist,
• einer der mindestens zwei genannten Durchlässe für Vorlauf (51,53) oder für Rücklauf (52,54) dient durch die zugehörigen Kanäle für den Elektrolytdurchfluss in und aus der Halbzelle, die durch den Rahmen festgelegt ist, oder zu einer angrenzenden Halbzelle und,
• die oder jeder andere der mindestens zwei genannten Durchlässe für Vorlauf (55,57) oder Rücklauf (56,58) zu einer entfernt liegenden Halbzelle in dem Stapel dient, über die zugehörigen Durchflusskanäle in einen entfernt liegenden Rahmen;
wobei die Gestaltung so getroffen ist, dass der Stapel entsprechend der Anzahl an Durchlässen für jeweils Vor- und Rücklauf von Anolyten und Katholyten in Teilabschnitte (46,47) unterteilt ist, wodurch die elektrische Spannung entlang den Anolyt- und Katholytkanälen in Kontakt mit den Zellen des Teilabschnitts die Gesamtspannung des Stapels ist, reduziert um das Verhältnis von der Anzahl an Zellen des Teilabschnitts zu der Gesamtanzahl an Zellen.

2. Elektrochemischer Zellenstapel nach Anspruch 1, **dadurch gekennzeichnet, dass** die Durchlässe (51) und die Kanäle(51,52,53,54,55,56,57,58) verdoppelt sind, das heißt, dass von jeder Ausführung zwei vorhanden sind.

3. Elektrochemischer Zellenstapel nach Anspruch 1 oder 2, **dadurch gekennzeichnet, dass** die Zellen rechteckig sind mit Durchflusskanälen für Vorlauf und Rücklauf, die an gegenüberliegenden kurzen Seiten der Rahmen (2,3) vorgesehen sind.

4. Elektrochemischer Zellenstapel nach Anspruch 1, 2 oder 3, **dadurch gekennzeichnet, dass** sich alle Durchlässe (41) für Vor- und Rücklauf an einander gegenüberliegenden kurzen Seiten der Rahmen befinden.

5. Elektrochemischer Zellenstapel nach Anspruch 1, 2 oder 3, **dadurch gekennzeichnet, dass** für jede Ausführung für Anolyt/Katholyt und Vorlauf/Rücklauf mehr als zwei Durchlässe/Kanäle (41) vorgesehen sind, die sowohl an dem Ende als auch an den Seiten der Rahmen angeordnet sind.

6. Elektrochemischer Zellenstapel nach einem der vorangegangenen Ansprüche, mit Dichtungen (14,70) zwischen benachbarten Rahmen.

7. Elektrochemischer Zellenstapel nach Anspruch 6, **dadurch gekennzeichnet, dass** die Dichtungen(14,70) O-Ring-Dichtungen sind und die Flächen der Rahmen auf einer oder auf beiden Seiten positionierende Furchen aufweisen.

8. Elektrochemischer Zellenstapel nach Anspruch 6 oder 7, **dadurch gekennzeichnet, dass**:
• eine Dichtung jede Ausführung von Durchlass umgibt, zusammen mit einer zugehörigen Dichtung innerhalb dieser Dichtung, die diesen oder jeden Durchlass abdichtet, der Teil des Kanals von einem entfernten Elektrolytvorrat zu dem Durchlass für den lokalen Vorrat über die Durchflusskanäle ist, und
• die Durchflusskanäle zu ihren Halbzellen über die Rahmenöffnungen führen.

9. Elektrochemischer Zellenstapel nach einem der vorangegangenen Ansprüche, **dadurch gekennzeichnet, dass** jeder Rahmen (2,3) Durchflusskanäle besitzt, die von den zugehörigen Durchlässen für den lokalen Elektrolytvorrat wegführen, oder jeder zweite Rahmen alle Durchflusskanäle (51,52,53,54) aufweist, die von oder zu den Durchlässen für den lokalen Elektrolytvorrat führen, wobei diese Durchflusskanäle in einer Fläche des Rahmens ausgebildet sind, die in einer Ebene mit einer interzellulären Elektrodenplatte ist.

10. Elektrochemischer Zellenstapel nach einem der vorangegangenen Ansprüche, **dadurch gekennzeichnet, dass** jeder Durchflusskanal in seinem Verlauf gewunden ist oder zumindest einen Rücklauf auf sich selbst hat, um die Länge des Durchflusskanals und den damit einhergehenden elektrischen Widerstand zu vergrößern.

11. Elektrochemischer Zellenstapel nach einem der vorangegangenen Ansprüche, **dadurch gekennzeichnet, dass** die Durchflusskanäle an Positionen (61) im Rahmen aufhören, die sich zwischen einem Durchflusskanal von einem der genannten mindestens zwei Durchlässen und dem oder jedem Anderen der genannten mindestens zwei Durchlässe befinden.

12. Elektrochemischer Zellenstapel nach einem der vorangegangenen Ansprüche, **dadurch gekennzeichnet, dass** die Durchflusskanäle durch eine Fläche des nächsten Rahmens in dem Stapel von Rahmen verschlossen sind.

13. Elektrochemischer Zellenstapel nach einem der vorangegangenen Ansprüche, **dadurch gekennzeichnet, dass** die Durchflusskanäle, oder die Rahmen-Durchgangsöffnungen wo vorgesehen, sich in Falzen in den Rahmen öffnen, um den Elektrolytfluss quer durch die Enden der Halbzelle zu verteilen oder zu sammeln.

14. Elektrochemischer Zellenstapel nach einem der vorangegangenen Ansprüche, **dadurch gekennzeichnet, dass** die Halbzellen mit Graphitfilz (25,26) ausgefüllt sind, um den elektrischen Kontakt zwischen dem Elektrolyt und der Elektrode der Halbzelle zu verbessern.

15. Elektrochemischer Zellenstapel nach einem der vorangegangenen Ansprüche, **dadurch gekennzeichnet, dass** die Membranen (30) semi-permeable Membranen sind, die abdichtend an einer glatte Fläche an einer Seite eines Rahmens anliegen, mittels einer Dichtung, die an einem Rahmen an der anderen Seite angeordnet ist.

## Revendications

1. Un empilement (1) de cellules électrochimiques comprenant une pluralité de cellules disposées côte-à-côte dans un empilement, chaque cellule comprenant :
• une membrane (30),
• une première cavité de demi-cellule (23) d'un côté de la membrane et une seconde cavité de demi-cellule (24) de l'autre côté de la membrane,
• une plaque d'électrode respective (7) du côté de chaque demi-cellule à l'opposé de la membrane, chaque plaque d'électrode assurant un contact entre cellules adjacentes au moins pour celles intermédiaires des cellules,
• une paire de cadres (2, 3), une pour chaque demi-cellule (2) et l'autre pour l'autre (3), les cadres :
• enserrant la membrane (30) entre eux,
• alignant les plaques d'électrodes (7), et
• comportant :
• des marges continues autour de vides centraux (5, 15) formant les cavités de demi-cellule,
• des ouvertures (41) dans les marges continues formant des conduits pour l'écoulement d'un électrolyte au travers de l'empilement pour distribution vers les cellules, de sorte qu'il y ait des ouvertures et des conduits respectifs à la fois pour l'alimentation et le retour aussi bien d'un anolyte que d'un catholyte vers les cellules,
• des passages d'écoulement d'électrolyte (51, 52, 53, 54, 55, 56, 57, 58) dans les marges continues de l'un ou l'autre ou des deux cadres de la paire pour qu'un électrolyte s'écoule à partir de l'une des ouvertures d'un conduit, jusque dans et hors de la demi-cellule et vers une autre des ouvertures de conduit,
dans lequel :
• chaque cadre comporte au moins deux ouvertures pour chacun d'entre l'alimentation et le retour de chacun de l'anolyte et du catholyte,
• l'une desdites au moins deux ouvertures étant pour l'alimentation (51, 53) ou le retour (52, 54) via des passages respectifs des passages d'écoulement d'électrolyte vers et depuis la demi-cellule définie par le cadre ou vers une demi-cellule adjacente, et
• l'autre ou chacune des autres desdites au moins deux ouvertures servant à l'alimentation (57, 57) ou le retour (56, 58) d'une demi-cellule distante dans l'empilement, via des passages d'écoulement respectifs dans un cadre distant ;
la configuration étant telle que l'empilement soit divisé en sections (46, 47) correspondant au nombre d'ouvertures pour chacune d'entre l'alimentation et le retour de l'anolyte et du catholyte, de sorte que la tension le long des conduits d'anolyte ou de catholyte en contact avec les cellules de la section soit la tension totale de l'empilement diminué du ratio du nombre de cellules de la section par rapport au nombre total de cellules.

2. Un empilement de cellules électrochimiques selon la revendication 1, dans lequel les ouvertures (51) et les conduits (51, 52, 53, 54, 55, 56, 57, 58) sont dupliqués, de sorte qu'il y en ait deux de chaque type.

3. Un empilement de cellules électrochimiques selon la revendication 1 ou la revendication 2, dans lequel les cellules sont rectangulaires avec des passages d'écoulement d'alimentation et de retour prévus sur des extrémités courtes opposées des cadres (2, 3).

4. Un empilement de cellules électrochimiques selon la revendication 1, la revendication 2 ou la revendication 3, dans lequel toutes les ouvertures (41) pour l'alimentation et le retour sont dans des extrémités courtes opposées des cadres.

5. Un empilement de cellules électrochimiques selon la revendication 1, la revendication 2 ou la revendication 3, dans lequel il est prévu plus de deux ouvertures/ conduits (41), pour chaque type d'écoulement/retour d'anolyte/catholyte, et qui sont configurés à la fois à l'extrémité et sur les côtés des cadres.

6. Un empilement de cellules électrochimiques selon l'une des revendications précédentes, comprenant des joints (14, 70) entre ceux des cadres qui sont adjacents.

7. Un empilement de cellules électrochimiques selon la revendication 6, dans lequel les joints (14, 70) sont des joints toriques, avec des gorges de positionnement sur l'une ou les deux faces des cadres.

8. Un empilement de cellules électrochimiques selon la revendication 6 ou la revendication 7, dans lequel :
• il existe un joint entourant des ouvertures de chaque type, ainsi qu'un joint respectif à l'intérieur de chacun de ces joints obturant la ou chacune des ouvertures formant une partie du conduit pour une alimentation distante d'électrolyte depuis l'ouverture pour l'alimentation locale via les passages d'écoulement, et
• les passages d'écoulement conduisent à leurs demi-cellules via des ouvertures traversantes du cadre.

9. Un empilement de cellules électrochimiques selon l'une des revendications précédentes, dans lequel chaque cadre (2, 3) comporte des passages d'écoulement conduisant depuis des ouvertures respectives de l'ouverture délivrant localement de l'électrolyte, ou un cadre sur deux possède tous les passages d'écoulement (51, 52, 53, 54) allant depuis/vers les ouvertures délivrant localement l'électrolyte, ces passages d'écoulement étant sur une face du cadre qui est au même niveau qu'une plaque d'électrode inter-cellules.

10. Un empilement de cellules électrochimiques selon l'une des revendications précédentes, dans lequel chaque passage d'écoulement depuis son conduit est en zigzag ou présente au moins un retour le ramenant sur lui-même, pour augmenter la longueur du passage d'écoulement et la résistance électrique le long de celui-ci.

11. Un empilement de cellules électrochimiques selon l'une des revendications précédentes, dans lequel les passages d'écoulement se terminent en des positions (61) du châssis qui sont communes comme entre un passage d'écoulement depuis l'une desdites au moins deux ouvertures et l'autre ou chacune des autres desdites au moins deux ouvertures.

12. Un empilement de cellules électrochimiques selon l'une des revendications précédentes, dans lequel les passages d'écoulement sont fermés par une face du cadre suivant de l'empilement de cadres.

13. Un empilement de cellules électrochimiques selon l'une des revendications précédentes, dans lequel les passages d'écoulement, ou les ouvertures traversantes du cadre s'il y en a, s'ouvrent dans des feuillures dans les cadres pour étaler ou recueillir le flux d'électrolyte entre les extrémités des demi-cellules.

14. Un empilement de cellules électrochimiques selon la revendication précédente, dans lequel les demi-cellules sont remplies de feutre de graphite (25, 26) pour augmenter le contact électrique entre l'électrolyte et l'électrode de la demi-cellule.

15. Un empilement de cellules électrochimiques selon la revendication précédente, dans lequel les membranes (30) sont des membranes semi-perméables maintenues de façon étanche contre une face pleine d'un cadre d'un côté de celui-ci par un joint porté par un cadre de l'autre côté.
